# EUROPÄISCHE PATENTSCHRIFT

(11) **EP 1 236 390 B1**
(45) Veröffentlichungstag und Bekanntmachung des Hinweises auf die Patenterteilung: **27.07.2005**
(21) Anmeldenummer: 02003609.1
(22) Anmeldetag: 16.02.2002
(51) Int. Cl.: A01D 61/00

(54) **Mechanismus zur schwenkbaren Anbringung eines Schrägförderers an einem Mähdrescher**
Mechanism for pivotally mounting an elevator conveyor on a combine harvester
Mécanisme pour le montage pivotant d'un élévateur-convoyeur sur une moissonneuse-batteuse

(30) Priorität: 28.02.2001 US 795752
(43) Veröffentlichungstag der Anmeldung: 04.09.2002
(73) Patentinhaber: DEERE & COMPANY, Moline, Illinois 61265-8098 (US)
(72) Erfinder: Mackin, Ryan Patrick, Milan, IL 61264 (US); Foerderer, Andrew James, Silvis, IL 61282 (US); Remley, Richard C., East Moline, IL 61244 (US); Signer, Todd Neil, East Moline, IL 61244 (US); Haar, Thomas Bernard, Bettendorf, IA 52722 (US); Melton, Mark Alan, Erie, IL 61250 (US)
(74) Vertreter: Holst, Sönke, Dr.

(56) Entgegenhaltungen:
- DE-U- 6 605 471
- US-A- 3 566 588
- US-A- 3 665 688
- US-A- 3 771 530
- US-A- 4 205 511
- US-A- 4 546 600
- US-A- 4 640 085
- US-A- 5 437 145
- PATENT ABSTRACTS OF JAPAN vol. 1998, no. 01, 30. Januar 1998 (1998-01-30) & JP 09 248037 A (YANMAR AGRICULT EQUIP CO LTD), 22. September 1997 (1997-09-22)
- DATABASE WPI Section PQ, Week 198832 Derwent Publications Ltd., London, GB; Class P12, AN 1988-226186 XP002201707 & SU 1 367 908 A (AS BELO METAL POLYM), 23. Januar 1988 (1988-01-23)

## Beschreibung

Die Erfindung betrifft einen Mechanismus zur schwenkbaren Anbringung eines Schrägförderers an einem Mähdrescher, mit einem mit dem Schrägförderer gekoppelten Schwenkelement und einem Halterungsmechanismus, der das Schwenkelement an einem Rahmenabschnitt des Mähdreschers hält. Ein dem Oberbegriff des Anspruchs 1 entsprechender Mechanismus ist bereits aus US-A-4546600 bekannt.

Konventionelle Mähdrescher weisen einen an der Vorderseite des Mähdreschers ankoppelbaren Erntevorsatz auf. Der Erntevorsatz greift in das Gut ein und schneidet es ab, während der Mähdrescher ein landwirtschaftliches Feld überfährt. Das abgeschnittene Gut wird dann in die Mitte des Erntevorsatzes geführt, wo es nach oben und hinten durch einen Schrägförderer abtransportiert wird. Der Schrägförderer leitet das abgeschnittene Gut nach hinten in den Mähdrescher zur weiteren Verarbeitung. Der Erntevorsatz und der Schrägförderer sind im Allgemeinen während des Betriebs starr aneinander gekoppelt. Der Schrägförderer ist mit dem Mähdrescher derart gekoppelt, dass der Schrägförderer und der Erntevorsatz gegenüber dem Mähdrescher schwenken können.

Es sind Elemente vorhanden, um es dem Erntevorsatz und dem Schrägförderer zu ermöglichen, gegenüber dem Mähdrescher zu verschwenken. An bekannten Schrägförderern sind ein Paar von seitlich beabstandeten Schwenkrohren befestigt. Elemente an der Vorderseite des Mähdreschers sind bereitgestellt, um mit diesen Schwenkrohren in Eingriff zu gelangen. Die Elemente an der Vorderseite des Mähdreschers dienen dazu, die Schwenkrohre zu haltern, während sie es den Schwenkrohren erlauben, gegenüber dem Mähdrescher zu schwenken. Dem Schrägförderer und dem Erntevorsatz wird dadurch erlaubt, gegenüber dem Mähdrescher zu verschwenken.

Manche Erntevorsätze werden automatisch durch Einrichtungen gesteuert, die den Erntevorsatz in Reaktion auf Wellen in der Bodenkontur verschwenken. Mit derartigen Steuereinrichtungen ausgestattete Erntevorsätze werden im Allgemeinen während des Betriebs relativ oft verschwenkt. Jedes Mal, wenn der Erntevorsatz gegenüber dem Mähdrescher verschwenkt wird, verschwenkt das Schwenkrohr geringfügig in den es am Mähdrescher haltenden Elementen. Die Schwenkrohre, wie auch die Elemente an der Vorderseite des Mähdreschers, die die Schwenkrohre haltern, reiben aneinander und tendieren dazu, wegen des häufigen Verschwenkens des Erntevorsatzes über wellenförmige Bodenkonturen eine hohe Abnutzung zu erfahren. Das Abnutzungsproblem wird durch die Verwendung immer breiterer Erntevorsätze weiter verstärkt. Die breiteren Erntevorsätze wiegen mehr als schmalere Erntevorsätze und deshalb bedingt das größere Gewicht der weiteren Erntevorsätze sogar noch größeren Verschleiß.

Eine Art eines Schwenkrohrmechanismus umfasst ein Gussteil mit voneinander beabstandeten Seitenwänden, die jeweils linke und rechte Enden eines Schwenkrohres abstützen. Um einen Erntevorsatz und einen Schrägförderer an einem selbstfahrenden Mähdrescher anzubringen, fährt ein Bediener den Mähdrescher von hinten an den Schrägförderer heran, bis die Schwenkrohre innerhalb V-förmiger Aussparungen positioniert sind, die am Frontabschnitt des Rahmenaufbaus des Mähdreschers geformt sind. Die Schwenkrohre werden dann in ihrer Position innerhalb der Aussparung dadurch in ihrer Position eingefangen oder gehaltert, dass eine Halterung in einer Position, in der sie sich über die Öffnung der Aussparung erstreckt, befestigt wird. Konventionelle Mähdrescher stellen eine Halterung bereit, die einen unteren Zapfenabschnitt hat, der in einer passenden Öffnung im unteren Abschnitt der Aussparung aufgenommen wird. Eine Schraube kann dann in den oberen Abschnitt der Halterung und in eine mit Gewinde versehene Öffnung am oberen Abschnitt der Aussparung gedreht und festgezogen werden, um dadurch die Halterung an Ort und Stelle festzusetzen, um im Ergebnis den offenen Teil der V-förmigen Aussparung zu schließen und das Schwenkrohr in der richtigen Position innerhalb der V-förmigen Aussparung festzuhalten.

Die Breite des Schwenkrohrs und der Abstand der Seitenwände des Gussteils ist geringfügig größer als die Dicke des Rahmenaufbaus, der die Aussparung bildet. Dadurch wird ein Freiraum bereitgestellt, so dass der Rahmenaufbau zwischen den Seitenwänden des Gussteils eingesetzt werden kann und ein leichtes Einsetzen des Schwenkrohrs in die Aussparung ermöglicht ist. Da der Rahmenaufbau schmaler als der Abstand der Seitenwände des Gussteils ist, können sich das Schwenkrohr und das Gussteil während des Betriebs geringfügig seitlich verschieben. Die Halterung hat eine Breite, die nicht größer als die Breite des Rahmenaufbaus ist und kann daher in einer geeigneten Position in Ausrichtung mit der Zapfenöffnung und der mit Gewinde versehenen Öffnung positioniert werden, unabhängig von der seitlichen Position des Schwenkrohrs und des Gussteils.

Das der Erfindung zugrunde liegende Problem wird darin gesehen, ein Schwenkrohr und eine zugehörige Struktur an der Vorderseite des Mähdreschers zur Halterung des Schwenkrohrs bereitzustellen, die gut geeignet sind, den häufigen Schwenkbewegungen zu widerstehen, die Folge der Verwendung von Steuerungen sind, welche die Orientierung des Erntevorsatzes wellenförmigen Bodenkonturen anpassen. Es wäre auch wünschenswert, einen derartigen Mechanismus bereitzustellen, der gut geeignet ist, den mit dem größeren Gewicht relativ breiter Erntevorsätze verbundenen Belastungen zu widerstehen. Es wäre auch wünschenswert, einen derartigen Mechanismus bereitzustellen, der in einer kosteneffektiven Weise auch nachträglich an bereits vorhanden Mähdreschern angebracht werden kann.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt einen zweiteiligen Halterungsmechanismus zur Befestigung eines Schwenkelements eines Schrägförderers an einem Rahmenabschnitt eines Mähdreschers vor. Ein erstes Halterungsteil liegt am Schwenkelement an. Ein zweites Halterungsteil liegt am ersten Halterungsteil an und ist am Rahmenabschnitt des Mähdreschers anbringbar. Es hält das erste Halterungsteil im Betrieb gegen das Schwenkelement.

Das erfindungsgemäße zweiteilige Design des Halterungsmechanismus ermöglicht es, unterschiedliche Materialen für das erste und das zweite Halterungsteil zu verwenden, um dadurch die Abnutzungseigenschaften zu verbessern und dem Mechanismus insgesamt abnutzungsresistenter zu gestalten. Der zweiteilige Halterungsmechanismus ist geeignet, bei entsprechender Wahl der Abmessungen auch nachträglich an bereits vorhandenen Mähdreschern angebracht zu werden.

Das erste Halterungsteil ist vorzugsweise aus einem Polymermaterial hergestellt, während das zweite Halterungsmaterial in der Regel aus Metall ist.

Der zweiteilige Halterungsmechanismus dient in der Regel dazu, das mit dem Schrägförderer verbundene Schwenkelement in einer insbesondere V-förmigen Aussparung im Rahmenabschnitt zu haltern. Der zweite Halterungsteil erstreckt sich dann quer über die Aussparung, in der das Schwenkelement angeordnet ist.

Das Schwenkelement, bei dem es sich in der Regel um ein Schwenkrohr handelt, kann durch eine Trägerstruktur am Schrägförderer befestigt werden. Die vorzugsweise als Gussteil hergestellte Trägerstruktur weist zwei voneinander beabstandete Seitenwände auf, zwischen denen sich das Schwenkelement erstreckt. Der Bereich des Schwenkelements, der zwischen den Seitenwänden liegt, ist am Rahmenabschnitt festgelegt. Der Abstand der Seitenwände ist daher größer als die Breite des Rahmenabschnitts des Mähdreschers. Das erste Halterungsteil ist dann ebenfalls zwischen den Seitenwänden angeordnet. Seine Breite entspricht etwa dem Abstand der Seitenwände, um eine möglichst große Auflagefläche auf dem Schwenkelement zu erhalten. Auch das zweite Halterungsteil ist zwischen den Seitenwänden angeordnet. Es ist etwas schmaler als der Abstand der Seitenwände.

Das Schwenkelement ist in der Regel kreiszylindrisch geformt. Es bietet sich an, auch das erste Halterungsteil mit einem bogenförmigen Abschnitt zu versehen, der am Schwenkelement in Anlage kommt. Die beiden Radien entsprechen sich zumindest näherungsweise. Dadurch erhält man eine relativ große Auflagefläche des ersten Halterungselements auf dem Schwenkelement, so dass sich die aufzunehmenden Kräfte über eine recht große Fläche verteilt optimal übertragen werden und die Reibung und der Verschleiß gering bleiben.

Die Befestigung des zweiten Halterungselement am Rahmenabschnitt kann durch einen Zapfenabschnitt des Halterungselements erfolgen, der in eine Öffnung im Rahmenabschnitt gesteckt wird. Anschließend wird das zweite Halterungsteil in seine Betriebsstellung verschwenkt. In der Regel ist der Zapfenabschnitt am unteren Ende des zweiten Halterungselements angeordnet.

Weiterhin kann das zweite Halterungsteil durch einen Gewindebolzen am Rahmenabschnitt befestigt werden. Der Gewindebolzen erstreckt sich durch eine Öffnung im Halterungselement und in eine mit Gewinde versehene Öffnung des Rahmenabschnitts des Mähdreschers. Der Gewindebolzen ist in der Regel am oberen Ende des zweiten Halterungsteils angeordnet.

In den Zeichnungen ist ein nachfolgend näher beschriebenes Ausführungsbeispiel der Erfindung dargestellt. Es zeigt:
- Fig. 1: eine schematische Seitenansicht eines Mähdreschers mit einem Erntevorsatz, einem Schrägförderer und einer erfindungsgemäßen schwenkbaren Verbindung,
- Fig. 2: eine perspektivische Ansicht der zusammengebauten schwenkbaren Verbindung zwischen dem Mähdrescher und dem Schrägförderer,

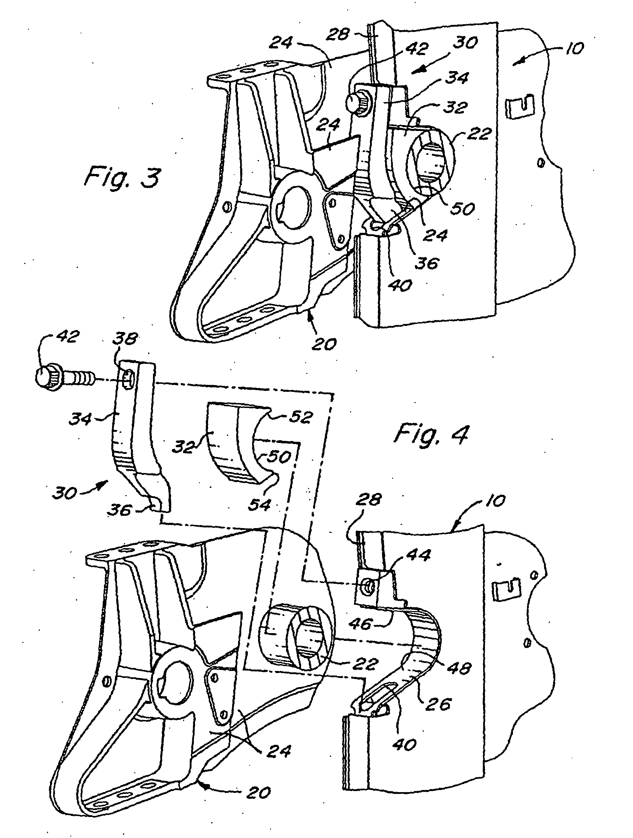

- Fig. 3: eine perspektivische Ansicht der zusammengebauten schwenkbaren Verbindung aus Figur 2, wobei ein Teil des Gussteils entfernt wurde, um das Schwenkrohr, das erste Halterungsteil, das zweite Halterungsteil und die V-förmige Aussparung gemäß der vorliegenden Erfindung darzustellen,
- Fig. 4: eine Explosionsansicht der schwenkbaren Verbindung gemäß der vorliegenden Erfindung, wobei ein Teil des Gussteils entfernt wurde, um das Schwenkrohr zu zeigen, und

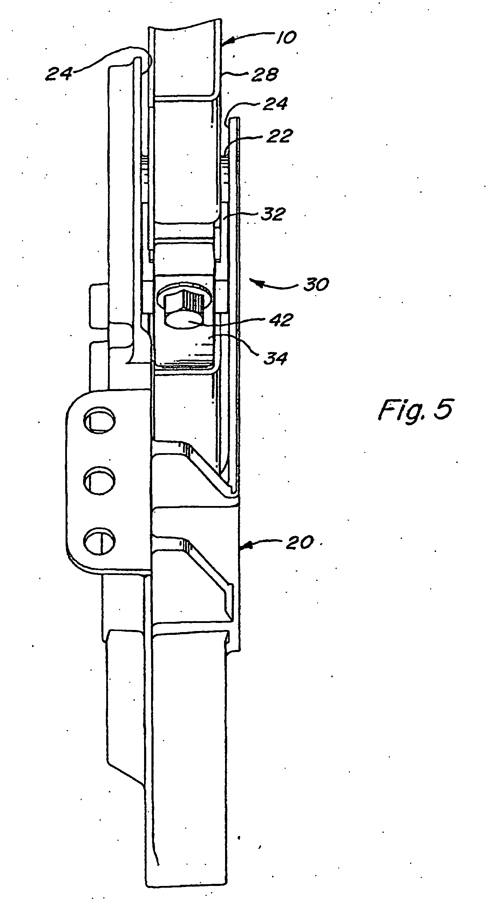

- Fig. 5: eine Draufsicht auf eine zusammengebaute, erfindungsgemäße schwenkbare Verbindung.

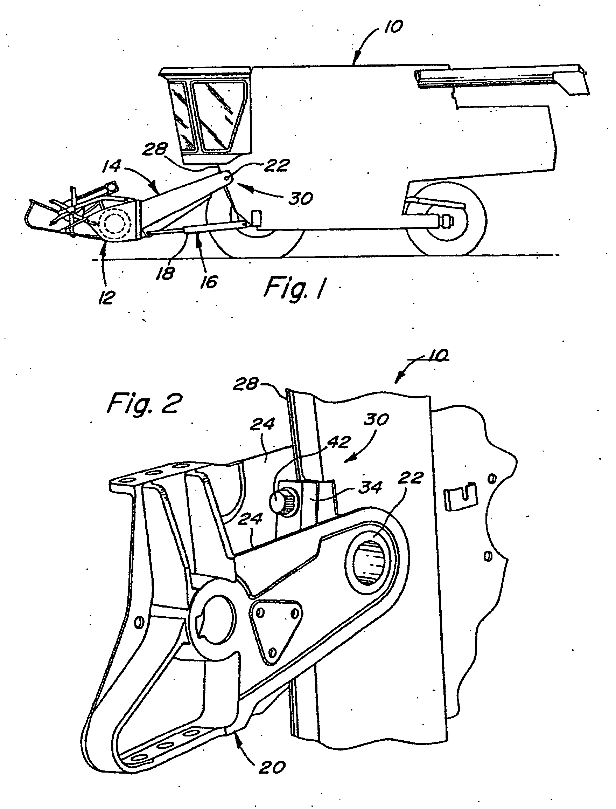

Es wird Bezug auf die Figur 1 genommen, in der ein selbstfahrender Mähdrescher 10 mit einem Erntevorsatz 12 und einem Schrägförderer 14 gezeigt ist, der an der Vorderseite des Mähdreschers 10 angebracht ist. Während des Betriebs fährt der Mähdrescher 10 vorwärts über ein Feld, von dem Erntegut zu ernten ist. Der Erntevorsatz 12 greift in das Erntegut ein und schneidet es ab und führt das Erntegut der Mitte des Erntevorsatzes 12 zu. Sobald es am mittleren Abschnitt des Erntevorsatzes 12 angekommen ist, wird das geerntete Gut durch den Schrägförderer 14 zwecks weiterer Verarbeitung innerhalb des Mähdreschers 10 nach oben und hinten geführt.

Der Mähdrescher 10 kann mit einem Steuerungsmechanismus 16 ausgestattet sein, der die Position des Erntevorsatzes 12 und des Schrägförderers 14 gegenüber dem eigentlichen Mähdrescher 10 selbsttätig steuert. Hydraulische Zylinder 18 können bereitgestellt sein, die den Erntevorsatz 12 und den Schrägförderer 14 gegenüber dem Mähdrescher 10 verschwenken, um dadurch automatisch Wellen in der Bodenkontur ausgleichen zu können.

An den jeweiligen Seiten des Schrägförderers 14 sind ein Paar als Trägerstrukturen dienende Gussteile 20 starr befestigt, von denen jede ein zylindrisches als Schwenkelement dienendes, starr darin befestigtes Schwenkrohr 22 umfassen. Das Gussteil 20 umfasst ein Paar seitlich beabstandeter Seitenwände 24, zwischen denen sich das Schwenkrohr 22 erstreckt. Die Schwenkrohre 22, die Gussteile 20, der Schrägförderer 14 und der Erntevorsatz 12 sind starr aneinander befestigt und schwenken daher während des Betriebs als eine Einheit. Das Schwenkrohr 22 ist innerhalb einer V-förmigen Aussparung 26 aufgenommen, die in einem Rahmenabschnitt 28 an der Vorderseite des Mähdreschers 10 geformt ist. Das Schwenkrohr 22 ist an Ort und Stelle gehaltert und wird innerhalb der Aussparung 26 durch einen erfindungsgemäßen, zweiteiligen Halterungsmechanismus 30 gehalten. Ein aus einem Polymermaterial hergestelltes erstes Halterungsteil 32 ist innerhalb der V-förmigen Aussparung 26 direkt an dem Schwenkrohr 22 positioniert. Ein zweites Halterungsteil 34 ist ein gegossenes Metallteil und umfasst einen Zapfenabschnitt 36 an seinem unteren Ende und eine Öffnung 38 an seinem oberen Abschnitt. Der Zapfenabschnitt 36 ist innerhalb einer Öffnung 40 in der Nähe des unteren Abschnitts der V-förmigen Aussparung 26 aufgenommen. Ein Gewindebolzen 42 ist innerhalb der Öffnung 38 an der Oberseite des zweiten Halterungsteils 34 angeordnet und in einer mit Gewinde versehenen Öffnung 44 in der Nähe des oberen Abschnitts der V-förmigen Aussparung aufgenommen. Wenn sie zusammengebaut sind, haltern das erste Halterungsteil 32 und das zweite Halterungsteil 34 das Schwenkrohr 22 innerhalb der V-förmigen Aussparung 26 und erlauben dem Schwenkrohr 22, gegenüber dem Rahmenabschnitt 28 und dem selbstfahrenden Mähdrescher 10 zu schwenken, um dadurch dem Erntevorsatz 12 und dem Schrägförderer 14 zu erlauben, durch den selbsttätigen Steuerungsmechanismus 16 verschwenkt zu werden.

Das erste Halterungsteil 32 ist dadurch in seiner geeigneten Position gehalten, dass es am Schwenkrohr 22, der oberen Oberfläche 46 und der unteren Oberfläche 48 der V-förmigen Ausnehmung 26, den Seitenwänden 24 des Gussteils 20 und am zweiten Halterungsteil 34 anliegt. Separate Befestigungselemente, wie Schrauben, zur Fixierung des ersten Halterungsteils 32 am zweiten Halterungsteil 34 erübrigen sich in der Regel. Die rückwärtige Oberfläche des ersten Halterungsteils 32 und die vordere Oberfläche des zweiten Halterungsteils 34 haben zusammenpassende, bogenförmige Formen, um zwischen ihnen wirkende Kräfte besser zu übertragen und die Abnutzung zwischen diesen beiden Teilen zu vermindern.

Um den erfindungsgemäßen Mechanismus zusammenzubauen, fährt der Bediener den Mähdrescher 10 auf den Schrägförderer 14 zu, so dass die V-förmigen Aussparungen 26 die Schwenkrohre 22 aufnehmen. Das erste Halterungsteil 32 wird dann in seine Position gebracht, in der es am Schwenkrohr 22 anliegt. Während er das erste Halterungsteil 32 an Ort und Stelle hält, setzt der Bediener den Zapfenabschnitt 36 des zweiten Halterungsteils 34 in die Öffnung 40 in der Nähe des unteren Endes 48 der V-förmigen Aussparung 26 ein und schwenkt dann das zweite Halterungsteil 34 nach oben, bis die Öffnung 38 an der Oberseite des zweiten Halterungsteils 34 mit der mit Gewinde versehenen Öffnung 44 nahe des oberen Endes 46 der V-förmigen Aussparung 26 ausgerichtet ist. Der Bediener setzt dann den Gewindebolzen 42 in die Öffnung 38 im zweiten Halterungsteil 34 und schraubt ihn in die mit Gewinde versehene Öffnung 44 im Rahmenabschnitt 28. Das Schwenkrohr 22 ist dann an seiner passenden Position sicher gehaltert und der Bediener wiederholt dann diesen Vorgang, um das andere Schwenkrohr 22 innerhalb der anderen V-förmigen Aussparung 26 zu sichern.

Das erste Halterungsteil 32 hat eine Breite, die im Wesentlichen mit dem Abstand zwischen den Seitenwänden des Gussteils 20 übereinstimmt. Das ermöglicht es dem ersten Halterungsteil 32, über eine relativ große Fläche mit dem Schwenkrohr 22 in Kontakt zu kommen. Das zweite Halterungsteil 34 ist näherungsweise so breit wie der Rahmenabschnitt 28, der die V-förmige Aussparung 26 definiert. Das ermöglicht es, das zweite Halterungsteil 34 an der richtigen Stelle zu positionieren, unabhängig von der seitlichen Position des Gussteils 20 gegenüber dem Rahmenabschnitt 28, wenn das Schwenkrohr 22 innerhalb der V-förmigen Aussparung 26 angeordnet ist.

Der erfindungsgemäße Halterungsmechanismus 30 umfasst eine Mehrzahl an Teilen, daher können die jeweiligen Teile aus unterschiedlichen Materialien hergestellt werden, wie Metall und Polymermaterialien, um die Abnutzungseigenschaften des Halterungsmechanismus 30 zu verbessern. Die Halterungsteile können aus Materialien hergestellt werden, die die Abnutzung zwischen dem Schwenkrohr 22 einerseits und dem ersten Halterungsteil 32 und dem zweiten Halterungsteil 34 andererseits effektiv reduzieren, und die auch hinreichende mechanische Festigkeit aufweisen, um den Belastungen zu widerstehen, die auf die verschiedenen Teile während des Betriebs des Mähdreschers wirken. Das erste Halterungsteil 32 kann aus einem Polymermaterial sein, wie das als Verton bezeichnete Material, das von einer als L.N.P. bekannten Gesellschaft hergestellt wird. Das erste Halterungsteil 32 kann auch aus einem pulverisiertem Metallmaterial hergestellt werden.

Das erste Halterungsteil 32 hat einen bogenförmigen Abschnitt 50, der über einen großen Teil des Radius des Schwenkrohrs 22 mit dem Schwenkrohr 22 im Eingriff steht. Da das erste Halterungselement 32 linear in seine Position am Schwenkrohr 22 verschoben werden kann, kann es mit einem längeren bogenförmigen Abschnitt 50 versehen werden als es bisher möglich war. Konventionelle einteilige Halterungsmechanismen mussten in ihre Position verschwenkt werden, nachdem der Zapfenabschnitt in einer Öffnung positioniert wurde, so dass der gebogene Abschnitt der konventionellen, einteiligen Halterungen keinen sich sehr weit erstreckenden bogenförmigen Abschnitt aufweisen konnte, weil die äußere Kante des bogenförmigen Abschnitts vom Schwenkrohr blockiert würde, wenn sie in Position gedreht wird. Das erfindungsgemäße Bereitstellen eines ersten Halterungsteils 32, der vom zweiten Halterungsteil 34 getrennt ist, ermöglicht daher die Verwendung eines gekrümmten Abschnitts 50, der über einen relativ großen Teil des Radius des Schwenkrohrs 22 mit dem Schwenkrohr 22 im Eingriff steht. Der größere gekrümmte Abschnitt 50 unterstützt eine Verteilung der Kräfte vom Schwenkrohr 22 über das erste Halterungsteil 32 und verbessert die Verschleißeigenschaften des Zusammenbaus. Die unteren und oberen Abschnitte 52 und 54 des gekrümmten Abschnitts 50 sind besonders hilfreich, um Material an den Stellen zu positionieren, wo große Kräfte vom Schwenkrohr 22 auf den Halterungsmechanismus 30 übertragen werden.

Der erfindungsgemäße zweiteilige Halterungsmechanismus 30 ist eingerichtet, auch nachträglich an bestehenden Mähdreschern angebracht zu werden, die einteilige Halterungsmechanismen aufweisen. Der erfindungsgemäße zweiteilige Halterungsmechanismus 30 umfasst ein erstes Halterungsteil 32, das in den Abstand zwischen den beiden Seitenwänden bestehender Gussteile 20 hineinpasst. Weiterhin hat das zweite Halterungsteil 34 einen Zapfenabschnitt 36 und eine Öffnung 38, die sich an derselben Stelle befinden, wie bei konventionellen einteiligen Halterungsmechanismen, und daher werden das erste Halterungsteil 32 und das zweite Halterungsteil 34 des zweiteiligen Halterungsmechanismus 30 an konventionelle Mähdrescher passen, die ähnliche Schwenkrohre, Gussteile und V-förmige Aussparungen aufweisen.

## Patentansprüche

1. Mechanismus zur schwenkbaren Anbringung eines Schrägförderers (14) an einem Mähdrescher (10), mit einem mit dem Schrägförderer (14) gekoppelten Schwenkelement und einem Halterungsmechanismus (30), der das Schwenkelement an einem Rahmenabschnitt (28) des Mähdreschers (10) hält, **dadurch gekennzeichnet, dass** der Halterungsmechanismus (30) ein erstes, am Schwenkelement anliegendes Halterungsteil (32) und ein zweites Halterungsteil (34) umfasst, welches das erste Halterungsteil (32) gegen das Schwenkelement hält und am Rahmenabschnitt (28) des Mähdreschers (10) fixierbar ist.

2. Mechanismus nach Anspruch 1, **dadurch gekennzeichnet, dass** das erste Halterungsteil aus einem Polymermaterial ist.

3. Mechanismus nach einem der vorhergehenden Ansprüche, **dadurch gekennzeichnet, dass** das Schwenkelement in einer im Rahmenabschnitt (28) vorgesehenen Aussparung (26) aufnehmbar ist.

4. Mechanismus nach Anspruch 3, **dadurch gekennzeichnet, dass** das zweite Halterungsteil (34) sich über die Aussparung (26) erstreckt, wobei das erste Halterungsteil (32) und das zweite Halterungsteil (34) das Schwenkelement in der Aussparung (28) haltern.

5. Mechanismus nach einen der vorhergehenden Ansprüche, **dadurch gekennzeichnet, dass** eine Trägerstruktur, insbesondere in Form eines Gussteils (20), sich zwischen dem. Schwenkelement und dem Schrägförderer (14) erstreckt, und dass die Trägerstruktur voneinander beabstandete Seitenwände (24) aufweist, zwischen denen das Schwenkelement befestigt ist, wobei der Abstand der Seitenwände (24) größer als die Breite des Rahmenabschnitts (28) des Mähdreschers (10) ist, an dem das Schwenkelement gehaltert wird.

6. Mechanismus nach Anspruch 5, **dadurch gekennzeichnet, dass** das erste Halterungsteil (32) zwischen den Seitenwänden (24) angeordnet und im Wesentlichen so breit ist wie der Abstand der Seitenwände (24) ist.

7. Mechanismus nach Anspruch 5 oder 6, **dadurch gekennzeichnet, dass** das zweite Halterungsteil (34) zwischen den Seitenwänden (24) angeordnet und schmaler als der Abstand zwischen den Seitenwänden (24) ist.

8. Mechanismus nach einem der vorhergehenden Ansprüche, **dadurch gekennzeichnet, dass** das Schwenkelement im Wesentlichen zylindrisch ist und das erste Halterungselement (32) einen bogenförmigen Abschnitt (50) aufweist, der am Schwenkelement anliegt.

9. Mechanismus nach einem der vorhergehenden Ansprüche, **dadurch gekennzeichnet, dass** das zweite Halterungsteil (34) einen Zapfenabschnitt (36) aufweist, der in einer Öffnung (40) im Rahmenabschnitt (28) aufgenommen ist, wobei das zweite Halterungsteil (34) in seine Betriebsstellung verschwenkbar ist, nachdem der Zapfenabschnitt (36) innerhalb der Öffnung (40) positioniert ist.

10. Mechanismus nach Anspruch 9, **dadurch gekennzeichnet, dass** ein Gewindebolzen (42) das zweite Halterungsteil (34) am Rahmenabschnitt (28) des Mähdreschers (10) haltert, nachdem der Zapfenabschnitt (36) in der Öffnung (40) positioniert ist.

## Claims

1. A mechanism for pivotally attaching a feederhouse (14) to a combine (10), comprising a pivot member coupled to the feederhouse (14) and a retainer mechanism (30) holding the pivot member to a frame portion (28) of the combine (10), **characterized in that** the retainer mechanism (30) comprises a first retainer piece (32) abutting the pivot member, and a second retainer piece (34) that holds the first retainer piece (32) to the pivot member and that can be fixed to the frame portion (28) of the combine (10).

2. A mechanism according to claim 1, **characterized in that** the first retainer piece (32) is a polymer material.

3. A mechanism according to claim 1 or 2, **characterized in that** the pivot element can be received in a notch (26) provided in the frame portion (28).

4. A mechanism according to claim 3, **characterized in that** the second retainer piece (34) extends across the notch (26), wherein the first retainer piece (32) and the second retainer piece (34) hold the pivot member in the notch (26).

5. A mechanism according to one of the preceding claims, **characterized in that** a support structure, especially in form of a cast piece (20), extends between the pivot element and the feederhouse (14), and that the support structure comprises spaced side walls (24) between which the pivot member is mounted, wherein the distance of the side walls (24) is larger than the width of the frame portion (28) of the combine (10) to which the pivot element is retained.

6. A mechanism according to claim 5, **characterized in that** the first retainer element (32) is located between the side walls (24) and generally as wide as the spacing of the side walls (24).

7. A mechanism according to claim 5 or 6, **characterized in that** the second retainer piece (34) is arranged between the side walls (24) and narrower than the spacing between the side walls (24).

8. A mechanism according to one of the preceding claims, **characterized in that** the pivot element is generally cylindrical and the first retainer piece (32) includes an arced portion (50) which abuts the pivot member.

9. A mechanism according to one of the preceding claims, **characterized in that** the second retainer piece (34) comprises a peg portion (36) received in an opening (40) in the frame portion (28), wherein the second retainer portion (34) can be pivoted into its operative position after the peg portion (36) was positioned within the opening (40).

10. A mechanism according to claim 10, **characterized in that** a threaded bolt (42) retains the second retainer piece (34) to the frame portion (28) of the combine, after the peg portion (36) was positioned in the opening (40).

## Revendications

1. Mécanisme pour le montage pivotant d'un élévateur-convoyeur (14) sur une moissonneuse-batteuse (10), avec un élément pivotant couplé avec l'élévateur-convoyeur (14) et avec mécanisme de support (30) qui maintient l'élément pivotant sur une section de cadre (28) de la moissonneuse-batteuse (10), **caractérisé en ce que** le mécanisme de support (30) comprend une première pièce de maintien (32) reposant sur l'élément pivotant et une deuxième pièce de maintien (34) qui maintient la première pièce de maintien (32) contre l'élément pivotant et qui peut être fixée sur la section de cadre (28) de la moissonneuse-batteuse (10).

2. Mécanisme selon la revendication 1, **caractérisé en ce que** la première pièce de maintien est constituée d'un matériau polymère.

3. Mécanisme selon l'une quelconque des revendications précédentes, **caractérisé en ce que** l'élément pivotant peut être logé dans un évidement (26) prévu dans la section de cadre (28).

4. Mécanisme selon la revendication 3, **caractérisé en ce que** la deuxième pièce de maintien (34) s'étend au-delà de l'évidement (26), la première pièce de maintien (32) et la deuxième pièce de maintien (34) maintenant l'élément pivotant dans l'évidement (26).

5. Mécanisme selon l'une quelconque des revendications précédentes, **caractérisé en ce qu'**une structure porteuse, en particulier sous la forme d'une pièce en fonte (20), s'étend entre l'élément pivotant et l'élévateur-convoyeur (14) et **en ce que** la structure porteuse comprend des parois latérales (24) espacées l'une de l'autre entre lesquelles est fixé l'élément pivotant, l'espacement entre les parois latérales (24) étant plus grand que la largeur de la section de cadre (28) de la moissonneuse-batteuse (10) sur laquelle est maintenu l'élément pivotant.

6. Mécanisme selon la revendication 5, **caractérisé en ce que** la première pièce de maintien (32) est disposée entre les parois latérales (24) et est sensiblement aussi large que l'espacement entre les parois latérales (24).

7. Mécanisme selon la revendication 5 ou 6, **caractérisé en ce que** la deuxième pièce de maintien (34) est disposée entre les parois latérales (24) et est plus étroite que l'espacement entre les parois latérales (24).

8. Mécanisme selon l'une quelconque des revendications précédentes, **caractérisé en ce que** l'élément pivotant est sensiblement cylindrique et **en ce que** le premier élément de maintien (32) comprend une section en forme d'arc (50) qui repose sur l'élément pivotant.

9. Mécanisme selon l'une quelconque des revendications précédentes, **caractérisé en ce que** la deuxième pièce de maintien (34) comprend une section en forme d'ergot (36) qui est logée dans une ouverture (40) se trouvant dans la section de cadre (28), la deuxième pièce de maintien (34) pouvant être pivotée dans sa position de fonctionnement après que la section en forme d'ergot (36) ait été positionnée à l'intérieur de l'ouverture (40).

10. Mécanisme selon la revendication 9, **caractérisé en ce que**, après que la section en forme d'ergot (36) ait été positionnée dans l'ouverture (40), un boulon fileté (42) immobilise la deuxième pièce de maintien (34) sur la section de cadre (28) de la moissonneuse-batteuse (10).
